# EUROPÄISCHE PATENTSCHRIFT

(11) **EP 0 671 608 B1**
(45) Veröffentlichungstag und Bekanntmachung des Hinweises auf die Patenterteilung: **21.07.1999**
(21) Anmeldenummer: 94119944.0
(22) Anmeldetag: 16.12.1994
(51) Int. Cl.: G01D 5/26

(54) **Positionsmesseinrichtung**
Position-measuring device
Dispositif de mesure de positions

(30) Priorität: 02.03.1994 DE 4406799
(43) Veröffentlichungstag der Anmeldung: 13.09.1995
(73) Patentinhaber: Dr. Johannes Heidenhain GmbH, D-83292 Traunreut (DE)
(72) Erfinder: Affa, Alfred, D-83371 Stein/Traun (DE)

(56) Entgegenhaltungen:
- EP-A- 0 084 624
- EP-A- 0 095 017
- EP-A- 0 110 059
- EP-A- 0 114 972
- DE-A- 2 349 944

## Beschreibung

Die Erfindung betrifft eine Positionsmeßeinrichtung gemäß dem Oberbegriff des Anspruches 1 bzw. des Anspruches 2.

Derartige Positionsmeßeinrichtungen werden zur Messung der Relativlage zweier Bauteile einer Werkzeugmaschine oder einer Koordinatenmeßmaschine eingesetzt.

Aus der DE 25 05 587 C3 ist eine Längenmeßeinrichtung bekannt, bei der ein Teilungsträger zweckmäßig an den Enden mit gelenkartig ausgebildeten Befestigungselementen an einem der zu messenden Bauteile befestigt ist.

Eine ähnlich ausgebildete Längenmeßeinrichtung ist in der EP 0 110 059 B1 beschrieben. An den Enden des Gehäuses sind elastische Befestigungselemente und in der Mitte ist ein starres Befestigungselement vorgesehen. Um zusätzlich Meßungenauigkeiten bei unterschiedlichen thermischen Ausdehnungskoeffizienten zwischen der Maßverkörperung und dem Trägerkörper zu vermeiden, erfolgt die Befestigung der Maßverkörperung mittels einer hochelastischen Klebstoffschicht.

Gemäß der EP 0 264 801 A1 ist die Maßverkörperung zum Längenausgleich auf Kugeln gelagert.

Die Längenmeßeinrichtung gemäß der DE 35 09 390 A1 besitzt elastische Befestigungselemente an den Enden des Gehäuses und weitere dazwischenliegende Befestigungselemente. Bei diesen weiteren Befestigungselementen handelt es sich um Befestigungswinkel, die am Gehäuse durch in eine Nut eingreifende Nutensteine festgeklemmt sind. Elastische Zwischenlagen sollen eine translatorische Bewegung zwischen dem Gehäuse und den Befestigungswinkeln ermöglichen. Nachteilig ist aber, daß durch die Schraubbefestigung keine spannungsfreie Verbindung entsteht. In der Praxis ist es unmöglich die Schrauben mit den Nutensteinen gleichmäßig anzuziehen, so daß auf das Gehäuse an den einzelnen Befestigungsstellen unterschiedliche Kräfte einwirken, was wiederum zu Meßfehlern führen kann.

Aufgabe der Erfindung ist es, eine Positionsmeßeinrichtung zu schaffen, bei der ungleiche thermische Eigenschaften des Trägerkörpers und des zu messenden Objektes, an das der Trägerkörper befestigt wird, praktisch keine Verfälschungen des Meßergebnisses hervorrufen und der Trägerkörper relativ spannungsfrei und trotzdem stabil befestigt ist. Weiterhin soll mit der Erfindung eine einfache und raumsparende Befestigung geschaffen werden.

Die Aufgabe wird erfindungsgemäß durch die Merkmale des Anspruches 1 bzw. des Anspruches 2 gelöst.

Die Vorteile der Erfindung bestehen darin, daß eine nahezu ungehinderte Längenausdehnung zwischen dem Trägerkörper und dem zu messenden Objekt erfolgen kann. Weiterhin ist eine stabile und schwingungsarme Befestigung gewährleistet. Die erfindungsgemäße Positionsmeßeinrichtung zeichnet sich weiterhin durch einen einfachen und raumsparenden Aufbau aus.

Vorteilhafte Ausbildungen der Erfindung sind in den abhängigen Ansprüchen angegeben.

Beispiele der Erfindung werden anhand der Zeichnungen näher erläutert.

Es zeigt
- Figur 1: eine Darstellung einer Längenmeßeinrichtung im Teilschnitt,
- Figur 2: einen Querschnitt der Längenmeßeinrichtung gemäß Figur 1 längs der Linie II-II,
- Figur 3: einen weiteren Querschnitt der Längenmeßeinrichtung gemäß Figur 1 längs der Linie III-III,
- Figur 4 bis 13: Querschnitte weiterer Längenmeßeinrichtungen im Befestigungsbereich,
- Figur 14: ein erfindungsgemäß ausgebildetes, separates Befestigungselement,
- Figur 15 bis 18: Längenmeßeinrichtungen mit erfindungsgemäß ausgebildeten Endstücken und
- Figur 19 bis 22: weitere erfindungsgemäße Längenmeßeinrichtungen.

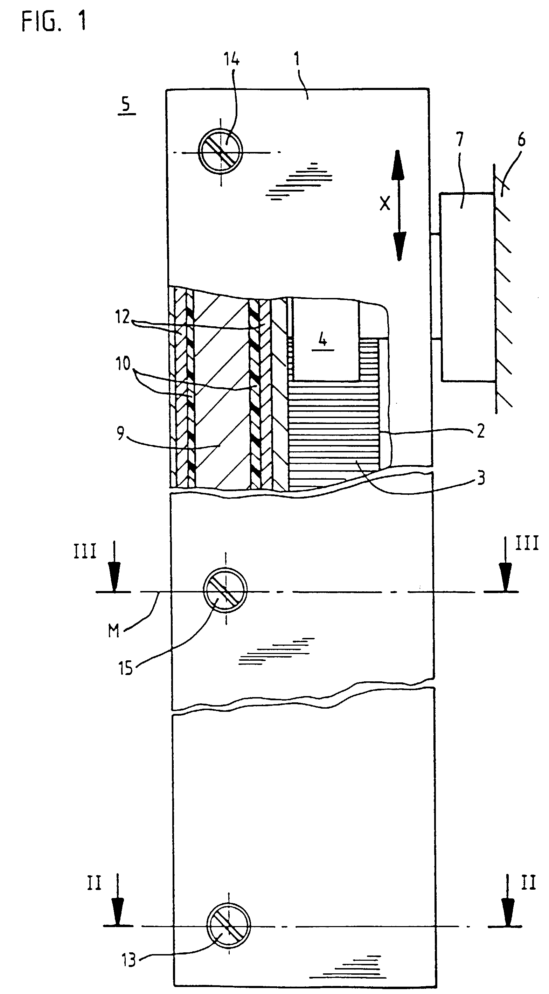

In den Figuren 1 bis 3 ist eine gekapselte Längenmeßeinrichtung mit einem Gehäuse 1 als Trägerkörper für eine Maßverkörperung 2 gezeigt. Auf der Maßverkörperung 2 ist eine Teilung 3 aufgebracht, die von einer Abtasteinrichtung 4 photoelektrisch abgetastet wird. Das Gehäuse 1 ist ein Hohlkörper aus Aluminium, in dessen Innenraum die Maßverkörperung 2 aus Glas befestigt ist. Um die Relativbewegung zwischen zwei Objekten 5, 6 zu messen, ist das Gehäuse 1 an einem dieser Objekte 5 und die Abtasteinrichtung 4 über einen Mitnehmer 7 am anderen Objekt 6 befestigt. Das eine Objekt ist beispielsweise der Schlitten 5 und das andere Objekt das Bett 6 einer Werkzeugmaschine.

Die Maßverkörperung 2 ist mittels einer elastischen Klebstoffschicht 8 an einer Innenfläche des Gehäuses 1 befestigt, so daß eine translatorische Lagerung der Maßverkörperung symmetrisch von der Mitte M ausgehend ermöglicht wird.

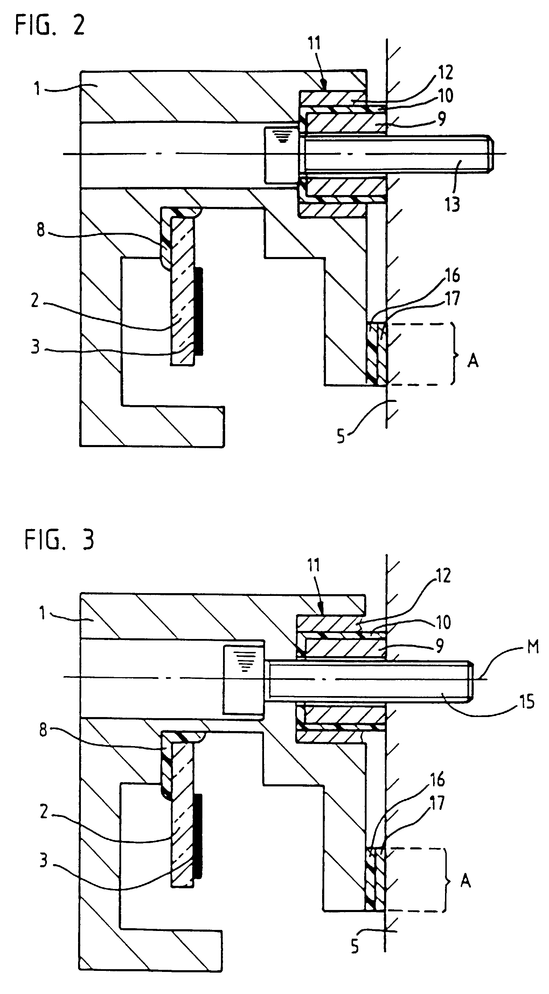

Zur Befestigung des Gehäuses 1 an einer Fläche des Schlittens 5 ist eine Schiene 9 aus Stahl vorgesehen. Es ist zwar bereits aus der DE 23 49 944 C3 und der US 4,586,760 bekannt, das Gehäuse über eine Schiene zu befestigen. Bei diesen bekannten Längenmeßeinrichtungen erfolgt die Verbindung zwischen dem Gehäuse und der Schiene über Schrauben, wodurch Verspannungen des Gehäuses auftreten und bei Temperaturänderungen keine freie Längenausdehnung zwischen der Schiene und dem Gehäuse möglich ist. Demgegenüber erfolgt die Verbindung erfindungsgemäß über eine hochelastische Klebstoffschicht 10. Die Schiene 9 ist über die gesamte Länge des Gehäuses 1 in einer Nut 11 des Gehäuses 1 eingeklebt. Um diese Verbindung besonders stabil und schwingungsarm auszubilden, ist zwischen der Klebstoffschicht 10 an den Seitenflächen der Schiene 9 und den Seitenflächen der Nut 11 eine relativ fest aushärtende Vergußmasse 12 eingebracht. Die Klebstoffschicht 10 hat durchgehend eine gleichmäßige Dicke von etwa 0,1mm, was über die gesamte Gehäuselänge gleiche Eigenschaften gewährleistet. Die Schiene 9 wird mit Schrauben 13 und 15 am Schlitten 5 fest angeschraubt. Um in der Mitte M des Gehäuses 1 einen stabilen Meßbezugspunkt zu erhalten, ist an dieser Stelle M eine Schraube 15 angebracht, mit der das Gehäuse 1 starr mit der Schiene 9 und somit starr mit dem Schlitten 5 verbunden ist. Diese Verbindung ist in Figur 3 im Detail gezeigt. Bei kleinen und somit leichten Gehäusen 1 kann die Schraube 15 entfallen und durch eine in Figur 2 gezeigte Verbindung ersetzt werden. In diesem Fall ergibt sich zwangsläufig in der Mitte M des Gehäuses 1 ein Meßbezugspunkt, von dem aus sich das Gehäuse 1 bei Temperaturänderungen symmetrisch in Meßrichtung X ausdehnen kann.

Um die Schwingungsfestigkeit noch zu erhöhen, stützt sich das Gehäuse 1 an einer Fläche des Schlittens 5 ab. An diesem Auflagebereich A ist eine weitere Klebstoffschicht 16 vorgesehen, die von einer an der Fläche des Schlittens anliegenden Gleitschicht 17 abgedeckt ist. Durch diese Maßnahme wird auch im Auflagebereich A eine ungehinderte Längenausdehnung zwischen Gehäuse 1 und Schlitten 5 gewährleistet. Es ist auch möglich, im Auflagebereich A eine andere elastische Schicht aufzubringen. Im Auflagebereich A kann auch nur eine Klebstoffschicht vorgesehen sein.

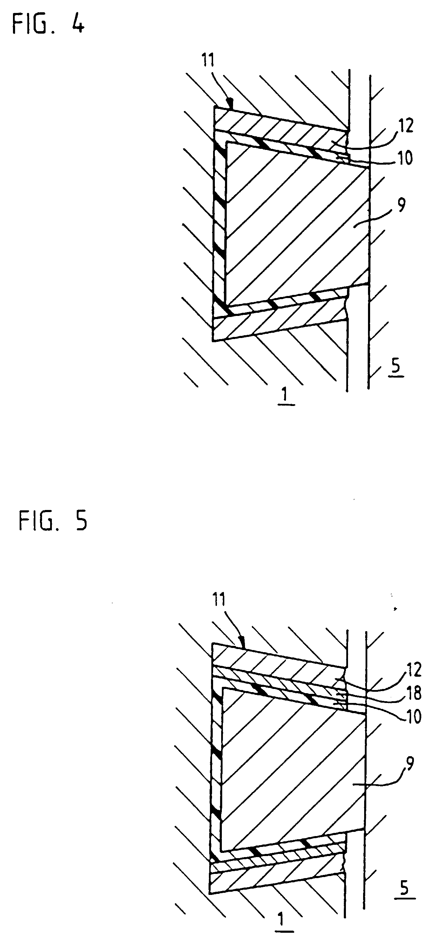

In den folgenden Beispielen gemäß Figur 4 bis Figur 9 ist die Schiene 9 schwalbenschwanzförmig ausgebildet, wodurch der Formschluß zwischen Gehäuse 1 und Schiene 9 verbessert wird. Es sind auch andere Nutformen mit Hinterschneidungen denkbar. In Figur 4 ist die Schiene 9 am Grund der schwalbenschwanzförmigen Nut 11 des Gehäuses 1 durch die Klebstoffschicht 10 fixiert. An den Seitenflächen der Schiene ist ebenfalls eine Klebstoffschicht 10 aufgebracht, die als Trennschicht zwischen Schiene und Vergußmasse 12 wirkt. Durch die Vergußmasse 12 ist die Schiene 9 eingespannt befestigt, wobei durch die dünne Klebstoffschicht 10 eine translatorische Ausdehnung der Schiene 9 ermöglicht wird, ohne daß Kräfte auf das Gehäuse 1 einwirken, die Meßfehler hervorrufen können. In der Klebstoffschicht 10 werden diese translatorischen Bewegungen kompensiert.

Um die Befestigung noch zwangskräftefreier und in Längsrichtung beweglicher zu gestalten, ist gemäß Figur 5 zwischen der Klebstoffschicht 10 und der Vergußmasse 12 eine Gleitschicht 18 vorgesehen. Diese Gleitschicht 18 kann eine Teflonfolie oder ein ölhaltiges Papier sein. Besonders vorteilhaft ist es, wenn eine Klebefolie verwendet wird, bei der das Schutzpapier als Gleitschicht dient. Die Gleitschicht kann auch ersatzweise oder zusätzlich zwischen der Klebstoffschicht und einer Seitenfläche der Nut oder Seitenfläche der Schiene vorgesehen sein.

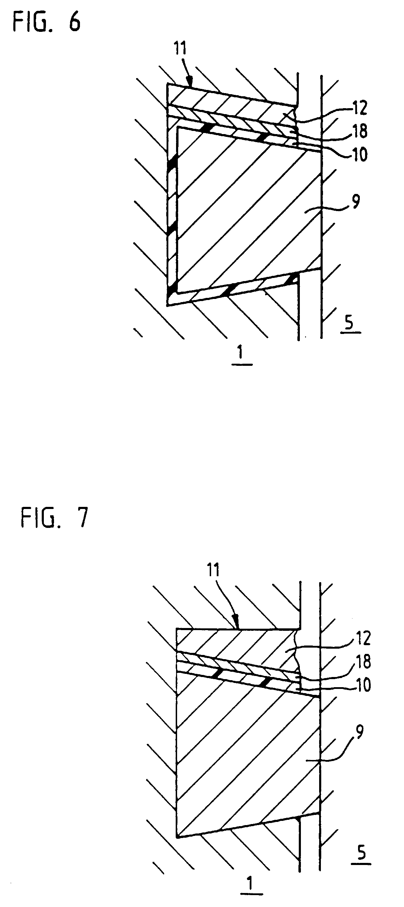

Nach Figur 6 ist die Schiene 9 am Grund und an einer Seitenfläche der Nut 11 über eine Klebstoffschicht 10 fixiert. Die weitere Seitenfläche der Schiene 9 ist ebenfalls mit einer Klebstoffschicht 10 und zusätzlich mit einer Gleitschicht 18 versehen. Die Einspannung der Schiene 9 in der Nut 11 erfolgt, indem in den Freiraum zwischen der Gleitschicht 18 und der weiteren Seitenfläche der Nut 11 eine fest aushärtende Vergußmasse 12 eingebracht wird.

Gemäß Figur 7 liegt die Schiene 9 am Grund und an einer Seitenfläche der Nut 11 gleitend an. Die weitere Seitenfläche der Schiene 9 ist mit einer Klebefolie, bestehend aus Klebstoffschicht 10 und Gleitschicht 18 versehen. Zwischen der Gleitschicht 18 und der weiteren Seitenfläche der Nut 11 ist eine Vergußmasse 12 eingebracht.

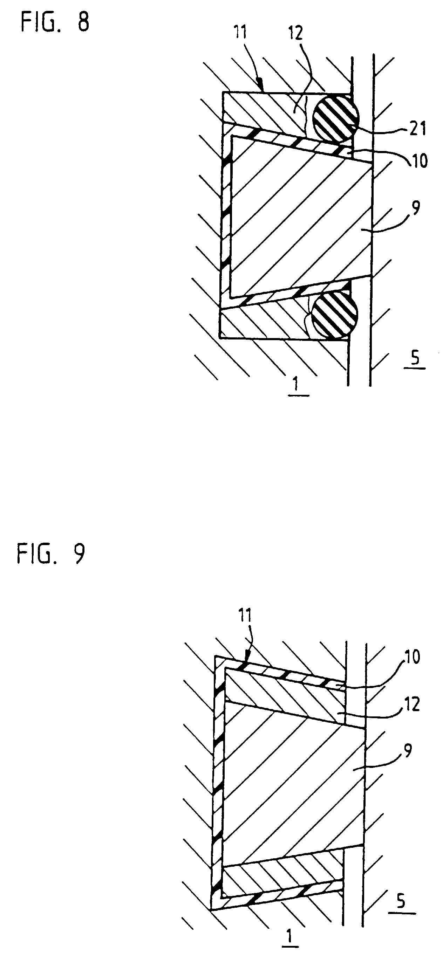

Die Befestigung der Schiene 9 gemäß Figur 8 ist ähnlich wie in Figur 4. Anstelle der schwalbenschwanzförmigen Nut ist eine rechteckförmige Nut 11 vorgesehen. Die Vergußmasse 12 ist durch Dichtelemente 21 gegen Umwelteinflüsse geschützt.

Bei den bisherigen Beispielen ist die Trennschicht in Form der Klebstoffschicht 10 bzw. der Klebstoffschicht 10 und der Gleitschicht 18 zwischen einer Fläche der Schiene 9 und der Vergußmasse 12 vorgesehen. Am Beispiel von Figur 9 soll gezeigt werden, daß diese Trennschichten 10, 18 auch zwischen der Vergußmasse 12 und einer Fläche der Gehäusenut 11 liegen können. Um die translatorische Beweglichkeit noch zu erhöhen, können Trennschichten auch zwischen der Schiene 9 und der Vergußmasse 12 sowie zusätzlich zwischen Vergußmasse 12 und Gehäusenut 11 vorgesehen sein.

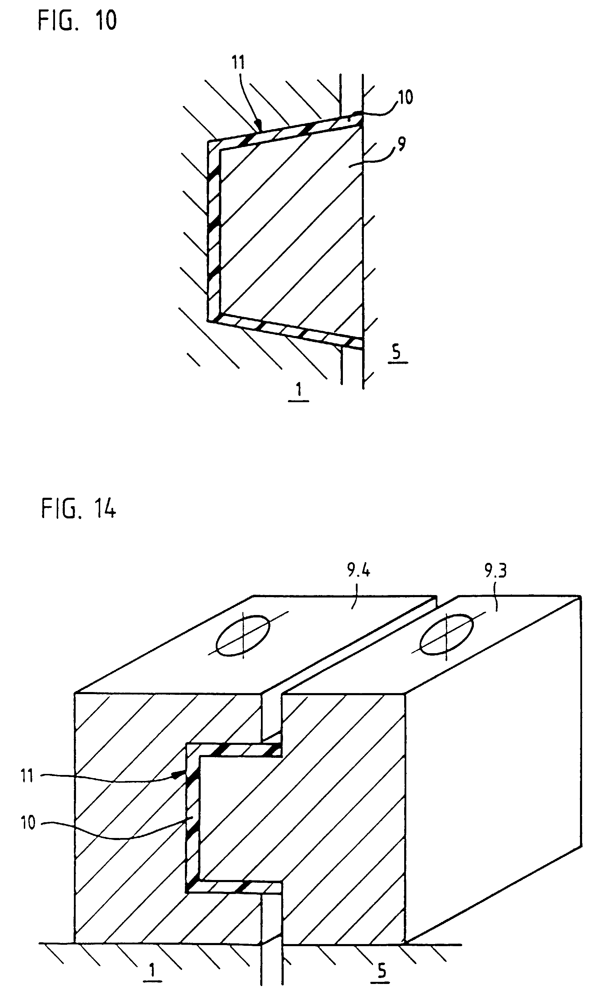

In Figur 10 ist dargestellt, daß die Befestigung zwischen dem Gehäuse 1 und der Schiene 9 auch ausschließlich mittels einer Klebstoffschicht 10 möglich ist. Durch die innere Flexibilität der Klebstoffschicht 10 können Längsausdehnungen zwischen Gehäuse 1 und Schiene 9 und somit auch zwischen Gehäuse 1 und Schlitten 5 kompensiert werden.

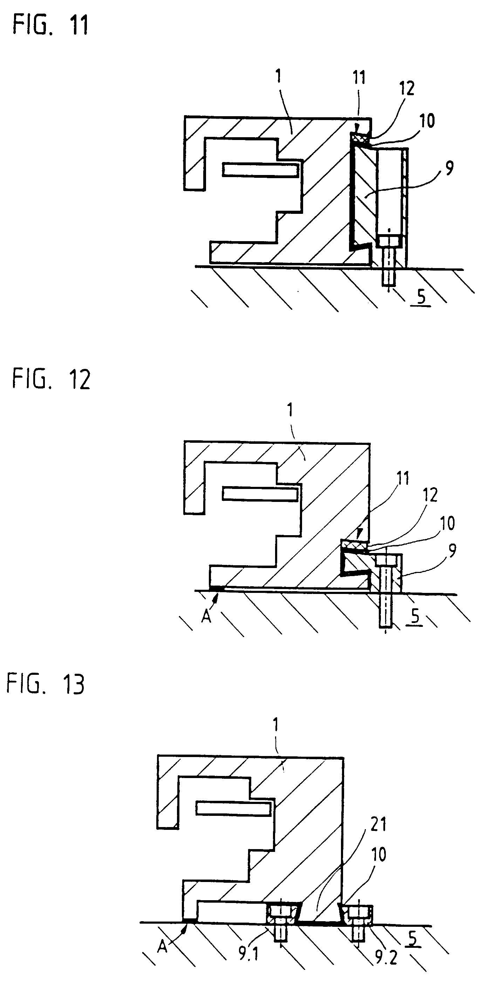

Um die Montage der Schiene 9 weiter zu vereinfachen, ragt die Schiene 9 gemäß Figur 11 zumindest an den zur Befestigung mit dem Schlitten 5 vorgesehenen Bereichen aus dem Gehäuse 1 heraus. In diesen Bereichen sind Bohrungen vorgesehen, mit denen die Schiene 9 vom Anwender starr an den Schlitten 5 angeschraubt werden kann. Die Schiene 9 selbst greift mit einem schwalbenschwanzförmigen Vorsprung formschlüssig in eine Nut 11 des Gehäuses 1 ein. Zwischen den Innenflächen der Nut 11 und den Oberflächen der Schiene 9 ist erfindungsgemäß die hochelastische dünne Klebstoffschicht 10 vorgesehen. Der verbleibende Raum ist mit einer Vergußmasse 12 ausgefüllt, wie zu den Figuren 2 bis 9 beschrieben.

Wird zur besseren Handhabung die Breite der Schiene 9 geringer gewählt, ist es vorteilhaft, wenn sich das Gehäuse 1 zusätzlich in einem Auflagebereich A abstützt. Dieses Ausführungsbeispiel ist in Figur 12 dargestellt. Eine Ausbildung des Auflagebereiches A ist in den Figuren 2 und 3 im Detail dargestellt.

In Figur 13 ist ein Beispiel gezeigt, wie eine formschlüssige Befestigung zwischen dem Gehäuse 1 und dem Schlitten 5 realisiert werden kann, ohne eine Vergußmasse 12 zu verwenden. Das Gehäuse 1 weist einen schwalbenschwanzförmigen Vorsprung 21 auf, der in Meßrichtung X verläuft. An den beiden Längsseiten des Vorsprungs 21 greifen formschlüssig zwei Schienen 9.1 und 9.2 ein. Die Schienen 9.1 und 9.2 sind starr am Schlitten 5 befestigt, wogegen zur translatorischen Lagerung des Gehäuses 1 zwischen den Flächen des Vorsprunges 21 des Geäuses 1 und den Flächen der Schienen 9.1 und 9.2 eine elastische Klebstoffschicht 10 vorgesehen ist. Um eine Reibung zwischen der dem Schlitten 5 gegenüberstehende Fläche des Vorsprunges 21 und dem Schlitten 5 zu vermeiden, kann ein Zwischenraum oder eine weitere Klebstoffschicht 10 vorgesehen sein.

Aus den gezeigten Beispielen ist ersichtlich, daß durch die Verwendung einer langen durchgehenden Befestigungsschiene 9 eine einfache und platzsparende Montage ermöglicht wird, indem die Schiene 9 in das Gehäuse 1 integriert ist.

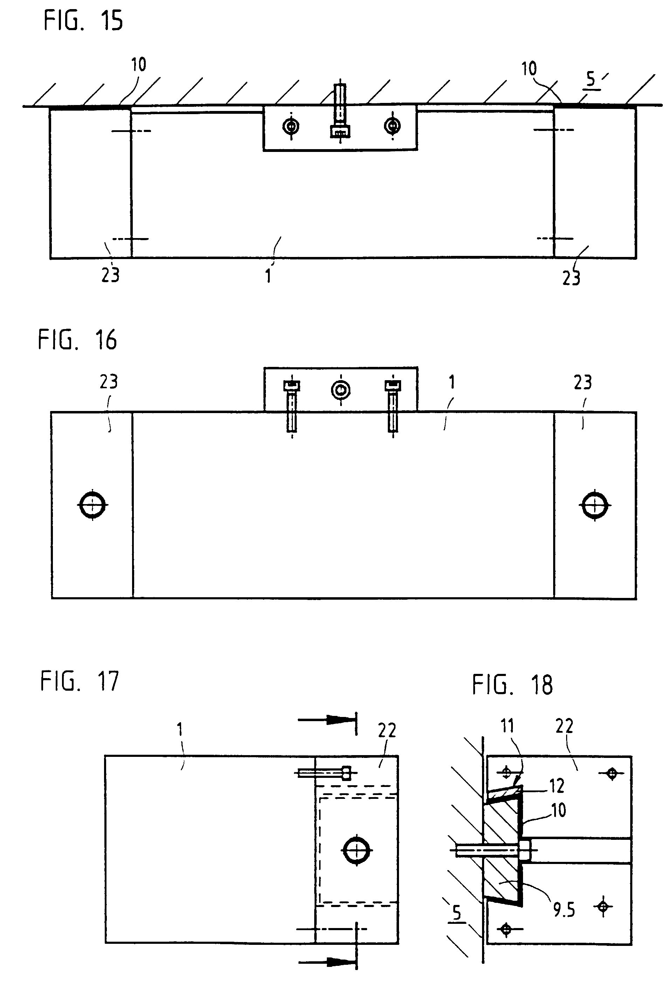

Wie in Figur 14 dargestellt ist, ist es auch möglich, anstelle einer integrierten Schiene 9 eine Schiene 9.3 zu verwenden, die erfindungsgemäß mit einer weiteren gehäuseseitigen Schiene 9.4 längsverschieblich verbunden ist. Die Schiene 9.3 wird starr am Schlitten 5 und die Schiene 9.4 starr am Gehäuse 1 befestigt, z.B. angeschraubt. Als Beispiel einer in Längsrichtung X elastischen Verbindung zwischen der einen Schiene 9.3 und der anderen Schiene 9.4 ist eine elastische Klebstoffschicht 10 gezeigt. Selbstverständlich können auch hier die bereits beschriebenen Schichten und Schichtkombinationen sowie Formen der Nut 11 Anwendung finden.

Die Ausführung nach Figur 14 hat den Vorteil, daß bereits im Einsatz befindliche Längenmeßeinrichtungen besonders einfach nachgerüstet werden können. Da die Schiene 9.4 starr am Gehäuse 1 befestigt wird, ist sie im montierten Zustand ebenfalls integrierender Bestandteil des Gehäuses 1.

Es liegt auch im Rahmen der Erfindung, anstelle einer über die gesamte Meßlänge reichende Schiene 9, 9.1, 9.2, 9.3, 9.4 voneinander beabstandete einzelne Schienenstücke zu verwenden, welche gemäß den oben erläuterten Beispielen ausgebildet und befestigt sind. Ein Beispiel hierzu ist in den Figuren 17 und 18 dargestellt, wobei Figur 18 einen Querschnitt der Längenmeßeinrichtung gemäß Figur 17 zeigt. Die Befestigung der Längenmeßeinrichtung erfolgt an den beiden Enden mit jeweils einem Endstück 22. An der dem Schlitten 5 gegenüberstehenden Fläche des Endstückes 22 ist eine Nut 11 eingebracht, in der formschlüssig ein Befestigungselement 9.5 eingeklebt ist. Die Befestigung des Befestungselementes 9.5 im Endstück 22 erfolgt wie die Befestigung der Schiene 9 im Gehäuse 1 bei den bereits erläuterten Beispielen. Durch das Zwischenschalten der elastischen Klebstoffschicht 10 zwischen dem Befestigungselement 9.5 und dem Endstück 22 ist eine kräftefreie translatorische Lagerung des Gehäuses 1 gegenüber den starr am Schlitten 5 fixierten Befestigungselementen 9.5 gewährleistet.

Die Endstücke 23 können auch derart ausgebildet sein, daß sie direkt über die elastische Klebstoffschicht 10 am Schlitten 5 befestigt werden können. Dieses Beispiel ist in den Figuren 15 und 16 dargestellt. Das Gehäuse 1 ist zusätzlich in der Mitte starr am Schlitten fixiert.

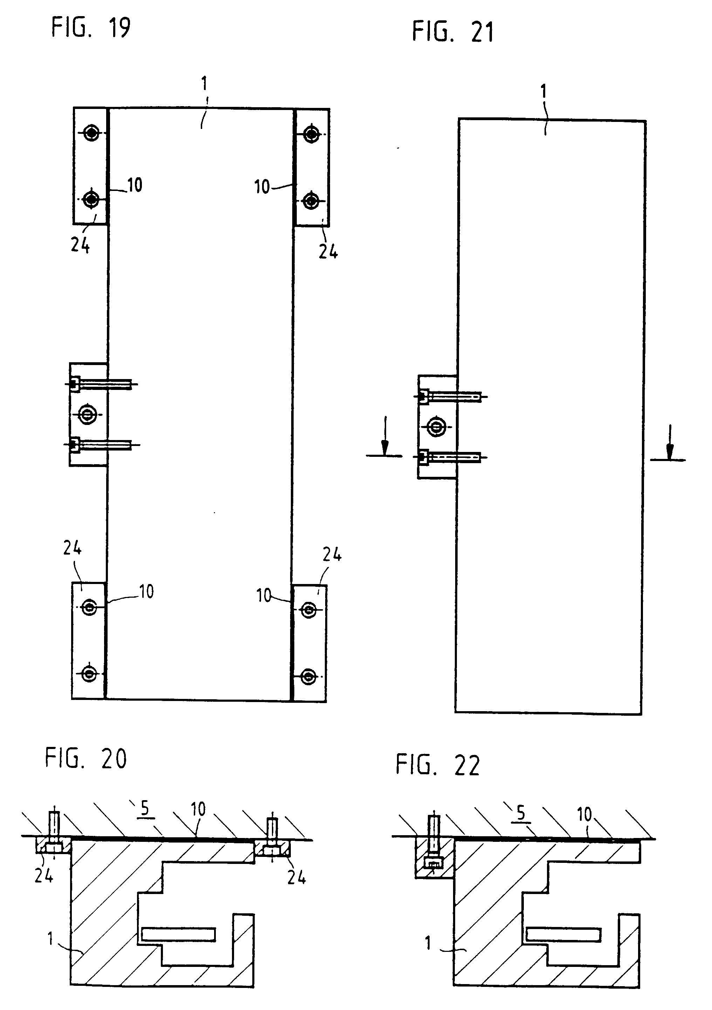

Um eine kräftefreie und reibungsarme translatorische Lagerung des Gehäuses 1 zu gewährleisten, kann auch das Gehäuse 1 selbst über eine elastische Klebstoffschicht 10 am Schlitten 5 befestigt werden. Hierzu ist gemäß den Figuren 19 bis 22 direkt auf einer Fläche des Gehäuses 1 eine Klebstoffschicht 10 aufgebracht. Die mittige Fixierung kann entfallen, da sich bei der elastischen Befestigung zwangsläufig der Fixpunkt in der Mitte ergibt. Zur seitlichen Führung können zusätzliche Führungselemente 24 vorgesehen werden. Um Reibung und seitliches Spiel zu vermeiden, ist zwischen den Führungselementen 24 und dem Gehäuse 1 ebenfalls eine elastische Klebstoffschicht 10 eingebracht.

Die Klebstoffschichten 10 müssen nicht ganzflächig aufgebracht sein, sie können insbesondere auch streifenförmig in Meßrichtung beabstandet vorgesehen sein. Die Klebstoffschicht 10 bleibt auch nach dem Trocknen hochelastisch, ist also dauerelastisch. Bei der Verwendung einer Vergußmasse 12 muß gewährleistet sein, daß die Klebstoffschicht 10 auf jeden Fall elastischer ist als die Vergußmasse 12.

In nicht gezeigter Weise kann die Erfindung auch bei offenen Längenmeßeinrichtungen eingesetzt werden. Anstelle des Gehäuses 1 wird die Maßverkörperung 2 dabei von einem schienenförmigen Trägerkörper gehalten.

Die Erfindung ist auch realisierbar, wenn die Nut in der Schiene bzw. in Schienenstücken und ein korrespondierender Vorsprung am Gehäuse vorgesehen bzw. angebracht ist.

Bei allen erfindungsgemäßen Ausführungen kann die Klebefläche des Gehäuses und/oder die Klebefläche des Befestigungselementes Vertiefungen gemäß DE 89 11 313 U1 aufweisen. Die Vertiefungen können auch derart ausgeführt sein, daß die Klebeschicht zur Vermeidung ihrer Ablösung eine Hinterschneidung einer Nut oder eines Vorsprungs formschlüssig ausfüllt oder umgreift, wie in der EP 0 465 966 A2 erläutert ist.

## Patentansprüche

1. Positionsmeßeinrichtung zum Messen der Relativlage zweier Objekte (5, 6), wobei am einen Objekt (5) ein Trägerkörper (1) mit einer Maßverkörperung (2) befestigt ist, die von einer am anderen Objekt (6) befestigten Abtasteinrichtung (4) abgetastet wird, und am einen Objekt (5) zumindest ein Befestigungselement (9) starr befestigt ist, mit dem der Trägerkörper (1) mit einem in Meßrichtung (X) verlaufenden translatorischen Freiheitsgrad am einen Objekt (5) befestigt ist,**dadurch gekennzeichnet,** daß zwischen dem Trägerkörper (1) einerseits und dem Befestigungselement (9) und gegebenenfalls zusätzlich dem einen Objekt (5) andererseits eine in die Meßrichtung (X) verlaufende elastische Klebstoffschicht (10, 16) zur translatorischen Lagerung des Trägerkörpers (1) vorgesehen ist.

2. Positionsmeßeinrichtung zum Messen der Relativlage zweier Objekte (5, 6), wobei am einen Objekt (5) ein Trägerkörper (1) mit einer Maßverkörperung (2) befestigt ist, die von einer am anderen Objekt (6) befestigten Abtasteinrichtung (4) abgetastet wird, und der Trägerkörper (1) in der Mitte (M) starr mit dem einen Objekt (5) verbunden ist, **dadurch gekennzeichnet**, daß zwischen dem Trägerkörper (1) und dem einen Objekt (5) eine in die Meßrichtung (X) verlaufende elastische Klebstoffschicht (10, 16) zur translatorischen Lagerung des Trägerkörpers (1) vorgesehen ist.

3. Positionsmeßeinrichtung nach Anspruch 2, dadurch gekennzeichnet, daß am einen Objekt (5) zumindest ein Befestigungselement (9) starr befestigt ist, und zwischen dem Trägerkörper (1) einerseits und dem Befestigungselement (9) und gegebenenfalls zusätzlich dem einen Objekt (5) andererseits eine in die Meßrichtung (X) verlaufende elastische Klebstoffschicht (10, 16) zur translatorischen Lagerung des Trägerkörpers (1) vorgesehen ist.

4. Positionsmeßeinrichtung nach Anspruch 1 oder 3, dadurch gekennzeichnet, daß zwischen dem Befestigungselement (9) und dem Trägerkörper (1) ein Formschluß vorgesehen ist, der in zumindest einer zur Meßrichtung (X) senkrecht verlaufenden Richtung wirkt und eine Linearführung zwischen dem Trägerkörper (1) und dem Befestigungselement (9) bildet.

5. Positionsmeßeinrichtung nach Anspruch 1 oder einem der Ansprüche 3 bis 4, dadurch gekennzeichnet, daß das Befestigungselement (9.5) am Endstück (22, 23) im Endbereich des Trägerkörpers (1) angeordnet ist.

6. Positionsmeßeinrichtung nach Anspruch 1 oder einem der Ansprüche 3 bis 4, dadurch gekennzeichnet, daß das Befestigungselement eine in Meßrichtung (X) verlaufende Schiene (9) ist.

7. Positionsmeßeinrichtung nach Anspruch 6, dadurch gekennzeichnet, daß die Schiene (9) höchstens an einer einzigen Position in der Mitte (M) des Trägerkörpers (1) mit dem Trägerkörper (1) in Meßrichtung (X) starr verbunden ist, und im übrigen Bereich die Schiene (9) über die elastische Klebstoffschicht (10) am Trägerkörper (1) befestigt ist, und daß die Schiene (9) am einen Objekt (5) starr befestigt ist.

8. Positionsmeßeinrichtung nach Anspruch 1 oder einem der Ansprüche 3 bis 5, dadurch gekennzeichnet, daß mehrere in Meßrichtung (X) voneinander beabstandete Befestigungselemente (9) vorgesehen sind.

9. Positionsmeßeinrichtung nach Anspruch 8, dadurch gekennzeichnet, daß mehrere der Befestigungselemente (9.5) ausschließlich unter Zwischenschaltung der elastischen Klebstoffschicht (10) mit dem Trägerkörper (1) verbunden sind und am einen Objekt (5) starr befestigt sind.

10. Positionsmeßeinrichtung nach Anspruch 1 oder einem der Ansprüche 3 bis 9, dadurch gekennzeichnet, daß im Trägerkörper (1) eine Nut (11) oder ein Vorsprung (21) vorgesehen ist, in der/dem zumindest ein Befestigungselement (9) mit einem translatorischen Freiheitsgrad befestigt ist, indem zumindest zwischen einer in Meßrichtung (X) verlaufenden Fläche der Nut (11) oder des Vorsprungs (21) und einer Fläche des Befestigungselementes (9) eine elastische Klebstoffschicht (10) eingebracht ist.

11. Positionsmeßeinrichtung nach Anspruch 10, dadurch gekennzeichnet, daß die Nut (11) oder der Vorsprung (21) Hinterschneidungen aufweist und einen Formschluß mit dem Trägerkörper (1) bildet, der in zwei zueinander senkrecht verlaufenden Richtungen wirkt, die wiederum senkrecht zur Meßrichtung (X) verlaufen.

12. Positionsmeßeinrichtung nach Anspruch 10 oder 11 dadurch gekennzeichnet, daß ein in Meßrichtung (X) verlaufender Spalt zwischen dem Befestigungselement (9) und einer Seitenfläche der Nut (11) oder des Vorsprungs (21) mit einer relativ unelastisch aushärtenden Vergußmasse (12) aufgefüllt ist und die elastische Schicht (10) zwischen einer Fläche des Befestigungselementes (9) und der Vergußmasse (12) und/oder zwischen der Vergußmasse (12) und einer Seitenfläche der Nut (11) oder des Vorsprungs (21) angebracht ist.

13. Positionsmeßeinrichtung nach Anspruch 12, dadurch gekennzeichnet, daß zwischen der elastischen Schicht (10) und der Vergußmasse (12) und/oder zwischen der elastischen Schicht (10) und der Seitenfläche der Nut (11) oder Seitenfläche des Befestigungselementes (9) zusätzlich eine Gleitschicht (18) vorgesehen ist.

14. Positionsmeßeinrichtung nach Anspruch 1 oder einem der Ansprüche 3 bis 13, dadurch gekennzeichnet, daß sich der Trägerkörper (1) an einem vom Befestigungselement (9) quer zur Meßrichtung (X) beabstandeten Flächenbereich (A) des einen Objektes (5) abstützt, und daß in diesem Auflagebereich (A) eine elastische Schicht (16) zwischen dem Trägerkörper (1) und dem einen Objekt (5) vorgesehen ist.

15. Positionsmeßeinrichtung nach einem der vorhergehenden Ansprüche, dadurch gekennzeichnet, daß die Maßverkörperung (2) unter Zwischenschaltung einer elastischen Klebstoffschicht (8) am Trägerkörper (1) befestigt ist.

16. Positionsmeßeinrichtung nach einem der vorhergehenden Ansprüche, dadurch gekennzeichnet, daß der Trägerkörper ein Gehäuse (1) ist, in dessen Hohlraum die Maßverkörperung (2) befestigt ist.

17. Positionsmeßeinrichtung nach Anspruch 1 oder einem der Ansprüche 3 bis 16, dadurch gekennzeichnet, daß das Befestigungselement (9) aus Stahl, der Trägerkörper (1) aus Aluminium und die Maßverkörperung (2) aus Glas besteht.

## Claims

1. A position measuring device for measuring the relative position between two objects (5, 6), wherein there is fixed to the one object (5) a support body (1) with a measuring entity (2), which is sensed by a sensing device (4) fixed to the other object (6), and at least one fixing element (9) is rigidly fixed on the one object (5), with which the support body (1) is fixed to the one object with a translational degree of freedom in the measuring direction (X), characterized in that an elastic adhesive layer (10, 16) extending in the measuring direction (X) is provided between the support body (1) on the one hand and the fixing element (9) and optionally also the one object (5) on the other hand, for the translational mounting of the support body (1).

2. A position measuring device for measuring the relative position between two objects (5, 6), wherein there is fixed to the one object (5) a support body (1) with a measuring entity (2), which is sensed by a sensing device (4) fixed to the other object (6), and the support body (1) is fixed rigidly in the middle (M) to the one object (5), characterized in that an elastic adhesive layer (10, 16) extending in the measuring direction (X) is provided between the support body (1) and the one object (5), for the translational mounting of the support body (1).

3. A position measuring device according to claim 2, characterized in that at least one fixing element (9) is rigidly fixed to the one object (5) and an elastic adhesive layer (10, 16) extending in the measuring direction (X) is provided between the support body (1) on the one hand and the fixing element (9) and optionally also the one object (5) on the other hand, for the translational mounting of the support body (1).

4. A position measuring device according to claim 1 or 3, characterized in that a positive engagement is provided between the fixing element (9) and the support body (1) and acts in at least one direction running perpendicular to the measuring direction (X) and provides linear guiding between the support body (1) and the fixing element (9).

5. A position measuring device according to claim 1 or either of claims 3 and 4, characterized in that the fixing element (9.5) is disposed on the end piece (22, 23) in the end region of the support body (1).

6. A position measuring device according to claim I or either of claims 3 and 4, characterized in that the fixing element is a rail (9) running in the measuring direction (X).

7. A position measuring device according to claim 6, characterized in that the rail (6) is rigidly connected in the measuring direction (X) to the support body (1) at the most at a single position in the middle (M) of the support body (1) and is fixed to the support body (1) over the remaining region of the rail (9) through the elastic adhesive layer (10), and in that the rail (9) is rigidly fixed to the one object (5).

8. A position measuring device according to claim 1 or any of claims 3 to 5, characterized in that a plurality of fixing elements (9) are provided, spaced from one another in the measuring direction (X).

9. A position measuring device according to claim 8, characterized in that several of the fixing elements (9.5) are connected to the support body (1) solely by interposition of the elastic adhesive layer (10) and are rigidly fixed to the one object (5).

10. A position measuring device according to claim I or any of claims 3 to 9, characterized in that a groove (11) or a projection (21) is provided in/on the support body (1), in/to which a fixing element (9) is fixed with a translational degree of freedom, in that an elastic adhesive layer (10) is applied between a surface of the groove (11) or of the projection (21) extending in the measuring direction (X) and a surface of the fixing element (9).

11. A position measuring device according to claim 10, characterized in that the groove (11) or the projection (21) has undercutting and makes positive engagement with the support body (1), acting in two directions which are perpendicular to each other and also perpendicular to the measuring direction (X).

12. A position measuring device according to claim 10 or 11, characterized in that a gap running in the measuring direction (X) between the fixing element (9) and a side surface of the groove (11) or of the projection (21) is filled with a potting compound (12) which hardens relatively inelastically and the elastic layer (10) is applied between a surface of the fixing element (9) and the potting compound (12) and/or between the potting compound (12) and a side surface of the groove (11) or of the projection (21).

13. A position measuring device according to claim 12, characterized in that a slip layer (18) is additionally provided between the elastic layer (10) and the potting compound (12) and/or between the elastic layer (10) and the side surface of the groove (11) or side surface of the fixing element (9).

14. A position measuring device according to claim I or any of claims 3 to 13, characterized in that the support body (1) abuts a surface region (A) of the one object (5) spaced transversely to the measuring direction (X) from the fixing element (9) and in that an elastic layer (16) is provided in this support region (A) between the support body (1) and the one object (5).

15. A position measuring device according to any of the preceding claims, characterized in that the measuring entity (2) is fixed to the support body (1) with interposition of an elastic adhesive layer (8).

16. A position measuring device according to any of the preceding claims, characterized in that the support body (1) is a housing, in the hollow space of which is fixed the measuring entity (2).

17. A position measuring device according to claim 1 or any of claims 3 to 16, characterized in that the fixing element (9) consists of steel, the support body (1) of aluminium and the measuring entity (2) of glass.

## Revendications

1. Dispositif de mesure de position pour mesurer la position relative de deux objets (5, 6), un élément support (1) avec une mesure matérialisée (2) étant fixé à l'un des objets (5), la mesure matérialisée étant palpée par un dispositif de palpage (4) lié à l'autre objet (6), et au moins un élément de fixation (9) par lequel l'élément support (1) est fixé à l'un des objets (5) avec un degré de liberté en translation dans la direction de mesure (X) étant fixé rigidement à l'un des objets (5), caractérisé par le fait qu'il est prévu, entre l'élément support (1) d'une part et l'élément de fixation (9) et le cas échéant l'un des objets (5) d'autre part, une couche d'adhésif (10, 16) élastique qui s'étend dans la direction de mesure (X) et assure le montage avec possibilité de déplacement en translation de l'élément support (1).

2. Dispositif de mesure de position pour mesurer la position relative de deux objets (5, 6), un élément support (1) avec une mesure matérialisée (2) étant fixé à l'un des objets (5), la mesure matérialisée étant palpée par un dispositif de palpage (4) fixé à l'autre objet (6), et l'élément-support (1) étant lié rigidement en son milieu (M) à l'un des objets (5), caractérisé par le fait qu'une couche d'adhésif (10, 16) élastique qui s'étend dans la direction de mesure (X) pour le montage avec possibilité de déplacement en translation de l'élément support (1) est prévue entre l'élément-support (1) et l'un des objets (5).

3. Dispositif de mesure de position selon la revendication 2, caractérisé par le fait qu'au moins un élément de fixation (9) est fixé rigidement à l'un des objets (5) et qu'une couche d'adhésif (10, 16) élastique qui s'étend dans la direction de mesure (X) pour le montage avec possibilité de déplacement en translation de l'élément support (1) est prévue entre l'élément-support (1) d'une part et l'élément de fixation (9) et le cas échéant l'un des objets (5) d'autre part.

4. Dispositif de mesure de position selon revendication 1 ou 3, caractérisé par le fait qu'il est prévu entre l'élément de fixation (9) et l'élément support (1) une liaison par obstacle qui agit dans au moins une direction normale à la direction de mesure (X) et forme un guidage linéaire entre l'élément support (1) et l'élément de fixation (9).

5. Dispositif de mesure de position selon la revendication 1 ou l'une des revendications 3 à 4, caractérisé par le fait que l'élément de fixation (9.5) est disposé sur la pièce d'extrémité (22, 23) dans la zone d'extrémité de l'élément support (1).

6. Dispositif de mesure de position selon la revendication 1 ou l'une des revendications 3 à 4, caractérisé par le fait que l'élément de fixation est un rail (9) qui s'étend dans la direction de mesure (X).

7. Dispositif de mesure de position selon la revendication 6, caractérisé par le fait que le rail (9) est lié rigidement à l'élément support (1) dans la direction de mesure (X), au plus en un point unique au milieu (M) de l'élément support (1) et qu'ailleurs le rail (9) est fixé à l'élément support (1) par l'intermédiaire de la couche d'adhésif (10) élastique et que le rail (9) est fixé rigidement à l'un des objets (5).

8. Dispositif de mesure de position selon la revendication 1 ou l'une des revendications 3 à 5, caractérisé par le fait qu'il est prévu plusieurs éléments de fixation (9) mutuellement espacés dans la direction de mesure (X).

9. Dispositif de mesure de position selon la revendication 8, caractérisé par le fait que plusieurs éléments de fixation (9.5) sont liés à l'élément support (1) exclusivement par interposition de la couche d'adhésif (10) élastique et sont fixés rigidement à l'un des objets (5).

10. Dispositif de mesure de position selon la revendication 1 ou l'une des revendications 3 à 9, caractérisé par le fait qu'il est prévu dans l'élément support une rainure (11) ou une saillie (21) dans laquelle/sur laquelle un élément de fixation (9) est fixé avec un degré de liberté en translation, une couche d'adhésif (10) élastique étant appliquée au moins entre une surface s'étendant dans la direction de mesure (X) de la rainure (11) ou de la saillie (21) et une surface de l'élément de fixation (9).

11. Dispositif de mesure de position selon la revendication 10, caractérisé par le fait que la rainure (11) ou la saillie (21) présente des contre-dépouilles et forme avec l'élément support (1) une liaison par obstacle qui agit dans deux direction mutuellement perpendiculaires, elles-mêmes perpendiculaires à la direction de mesure (X).

12. Dispositif de mesure de position selon revendication 10 ou 11, caractérisé par le fait qu'un espace qui s'étend dans la direction de mesure (X) entre l'élément de fixation (9) et une face latérale de la rainure (11) ou de la saillie (21) est comblé à l'aide d'une masse de remplissage (12) qui devient relativement peu élastique en durcissant et la couche (10) élastique est appliquée entre une surface de l'élément de fixation (9) et que la masse de remplissage (12) et/ou entre la masse de remplissage (12) et une face latérale de la rainure (11) ou de la saillie (21).

13. Dispositif de mesure de position selon revendication la 12, caractérisé par le fait qu'une couche de glissement (18) est prévue en plus entre la couche élastique (10) et la masse de remplissage (12) et/ou entre la couche élastique (10) et la face latérale de la rainure (11) ou la face latérale de l'élément de fixation (9).

14. Dispositif de mesure de position selon la revendication 1 ou l'une des revendications 3 à 13, caractérisé par le fait que l'élément support (1) prend appui sur une partie de surface (A) de l'un des objets (5) éloignée de l'élément de fixation (9) transversalement à la direction de mesure (X) et par le fait qu'une couche (16) élastique est prévue dans cette zone d'appui (A), entre l'élément support (1) et l'objet (5).

15. Dispositif de mesure de position selon une des revendications précédentes caractérisé par le fait que la mesure matérialisée (2) est fixée à l'élément support (1) en interposant une couche d'adhésif (8) élastique.

16. Dispositif de mesure de position selon une des revendications précédentes caractérisé par le fait que l'élément support est un boîtier (1) à l'intérieur duquel la mesure matérialisée (2) est fixée.

17. Dispositif de mesure de position selon la revendication 1 ou l'une des revendications 3 à 16, caractérisé par le fait que l'élément de fixation (9) est réalisé en acier, l'élément support (1) en aluminium et la mesure matérialisée (2) en verre.
